# EUROPÄISCHE PATENTSCHRIFT

(11) **EP 0 890 831 B1**
(45) Veröffentlichungstag und Bekanntmachung des Hinweises auf die Patenterteilung: **13.09.2006**
(21) Anmeldenummer: 98112268.2
(22) Anmeldetag: 02.07.1998
(51) Int. Cl.: G01L 9/00, H01G 5/16

(54) **Kondensatoranordnung und Herstellungsverfahren**
Capacitor arrangement and its manufacturing process
Agencement de condensateurs et procédé de fabrication

(30) Priorität: 11.07.1997 DE 19729785
(43) Veröffentlichungstag der Anmeldung: 13.01.1999
(73) Patentinhaber: Micronas GmbH, 79108 Freiburg i. Br. (DE)
(72) Erfinder: Igel, Günter, Dipl.-Ing., 79331 Teningen (DE)
(74) Vertreter: Patentanwälte Westphal, Mussgnug & Partner

(56) Entgegenhaltungen:
- DE-A- 3 310 643

## Beschreibung

Die Erfindung betrifft eine Kondensatoranordnung sowie ein Verfahren zum Herstellen einer Kondensatoranordnung.

Aus der DE 33 10 643 ist eine Kondensatoranordnung bekannt, die aus zwei Substratscheiben besteht, auf deren Oberfläche je eine Kondensatorelektrode aufgebracht ist, welche durch eine Isolatorschicht von der jeweiligen Substratscheibe isoliert ist. Der Abstand der Kondensatorelektroden voneinander wird durch eine teilweise auf den Kondensatorelektroden aufgebrachte Abdeckschicht bestimmt, welche ein Dielektrikum des Kondensators bildet. Die beiden Substratscheiben werden mit Hilfe einer Bump-Technologie miteinander verbunden. Die Kondensatoranordnung wird als Drucksensor verwendet.

Nachteilig an dieser Kondensatoranordnung ist, daß eine abstandshaltende Schicht, nämlich die Abdeckschicht, erforderlich ist, um den Abstand zwischen den Kondensatorelektroden einzustellen und die Anordnung auf diesem Abstand zu halten. Dabei wird durch die Dicke der abstandshaltenden Schicht die Kapazität der Kondensatoranordnung eindeutig festgelegt, so daß eine Variation der Kapazität nach Aufbringen der Abdeckschicht nicht mehr möglich ist. Ferner bedingt die Variation der Dicke der abstandshaltenden Schicht eine Variation der Kapazität des Kondensators. Zudem sind zum Herstellen der abstandshaltenden Schicht zusätzliche Photolithographie- und Ätzprozesse erforderlich, durch welche das Verfahren aufwendig wird. Wenn eine dicke abstandshaltende Schicht erforderlich ist, wird das Verfahren außerdem noch dadurch erschwert, daß die Schicht nicht mit den Standardprozessen der Dünnschichttechnologie hergestellt werden kann.

Der Erfindung liegt die Aufgabe zugrunde, eine Kondensatoranordnung und ein Verfahren zum Herstellen einer Kondensatoranordnung zu schaffen, dessen Kapazität über einen weiten Bereich genau einstellbar ist, und das einfacher in der Herstellung ist.

Diese Aufgabe wird durch eine Kondensatoranordnung mit zwei Substratscheiben gelöst, auf deren Oberfläche je eine Kondensatorelektrode aufgebracht ist, wobei die Substratscheiben durch sich beidseitig der Kondensatorelektroden befindende Bump-Strukturen miteinander derart verbunden sind, daß die Kondensatorelektroden einander gegenüber liegen und einen Kondensator bilden, der Abstand der Kondensatorelektroden nur durch die Höhe der Bump-Strukturen festgelegt ist und auf einer Substratscheibe Meßanschlüsse zur Kapazitätsmessung angeordnet sind. Da bei der erfindungsgemäßen Kondensatoranordnung der Abstand der Kondensatorelektroden nur durch die Bump-Strukturen festgelegt ist, ist keine abstandshaltende Schicht zwischen den Kondensatorelektroden erforderlich. Somit werden zum einen Prozeßschritte zum Herstellen der abstandshaltenden Schicht eingespart. Zum anderen wird die Kapazität des Kondensators nicht durch eine solche abstandshaltende Schicht beeinflußt. Die Kapazität der Kondensatoranordnung kann durch den Abstand in einem großen Bereich auf einen festen Kapazitätswert C₀ eingestellt werden, da die Bump-Strukturen in ihrer Höhe variabel sind.

Ferner wird die Aufgabe durch ein Verfahren zum Herstellen einer Kondensatoranordnung gelöst, bei dem zwei Substratscheiben, auf deren Oberfläche je eine Kondensatorelektrode und beidseitig der Kondensatorelektrode auf wenigstens eine der Substratscheiben Bump-Strukturen aufgebracht sind, mittels der Bump-Strukturen derart miteinander verbunden werden, daß die Kondensatorelektroden einander gegenüberliegen und einen Kondensator bilden, wobei während des Verbindungsprozesses zur Einstellung des Abstandes der Kondensatorelektroden ein Druck p auf eine der Substratscheiben ausgeübt und die Kapazität des Kondensators gemessen wird, und bei Erreichen eines bestimmten Kapazitätswertes C₀ der Verbindungsprozeß beendet wird.

Dadurch, daß während des Verbindungsprozesses ein Druck auf eine der Substratscheiben ausgeübt wird, kann der Abstand der Kondensatorelektroden und damit die Kapazität des Kondensators während des Verbindungsprozesses eingestellt werden. Hierzu ist kein Abstandshalter erforderlich. Zudem läßt sich die Kapazität des Kondensators über einen weiten Bereich variieren. Es kann ein gewünschter vorgegebener Kapazitätswert C₀ zuverlässig und genau eingestellt werden, weil er während des Verbindungsprozesses gemessen wird. Ist der Kapazitätswert C₀ erreicht, so wird der Verbindungsprozeß beendet. Es wird kein weiterer Druck auf die Substratscheibe ausgeübt, so daß der Abstand der Kondensatorelektroden und damit der Kapazitätswert fest bleiben. Somit ist der vorherbestimmte Kapazitätswert C₀ fest eingestellt. Die Bump-Strukturen behalten ihre Form, die sie nach Beenden des Ausübens des Druckes auf die Substratscheibe erhalten haben, fest bei. Durch die Form der Bump-Strukturen, d.h. insbesondere durch ihre Höhe zwischen den Substratscheiben, ist der Abstand der Substratscheiben und damit der Abstand der Kondensatorelektroden und somit die Kapazität des Kondensators bestimmt.

Erfindungsgemäße Weiterbildungen der Erfindung sind in den Unteransprüchen offenbart.

Eine Bump-Struktur kann aus zwei miteinander verlöteten Bump-Elementen bestehen, die auf den einander gegenüberliegenden Substratscheiben angeordnet sind. Die Bump-Strukturen können aus Metall gebildet sein, und bei dem Verbindungsprozeß kann die Temperatur im Bereich der Bump-Strukturen auf einen zur Verbindung der Bump-Elemente mit dem jeweils gegenüberliegenden Bump-Element oder mit der gegenüberliegenden Substratscheibe geeigneten Wert T₁ gebracht werden, die Temperatur, bei der der Druck p ausgeübt wird, auf einen Wert T₀ < T₁ erniedrigt werden, und bei Erreichen des Kapazitätswertes C₀ die Temperatur wieder auf die Umgebungstemperatur erniedrigt werden. Hierbei wird ausgenutzt, daß die metallischen Bump-Elemente sich bei der Temperatur T₁ miteinander verbinden, wobei sie sich selbst zentrieren, und bei der Temperatur T₀ die Bump-Struktur durch Druckeinwirkung verformbar ist, so daß sich die Höhe der Bump-Strukturen verringert. Durch Ausüben des Druckes auf eine Substratscheibe wird somit der Abstand zwischen den Kondensatorelektroden kontinuierlich kleiner.

Es ist vorteilhaft, wenn die Temperatur T₀ so gewählt ist, daß sie niedriger als die Schmelztemperatur der Bump-Struktur ist, und die Bump-Struktur dabei noch plastisch verformbar ist. Hierdurch erfolgt das Verringern des Abstandes zwischen den Substratscheiben besonders einfach. Zwei einander gegenüberliegende Bump-Elemente sind durch das Verschmelzen bereits so zentriert, daß sie in ihren jeweiligen Mittelpunkten aufeinandertreffen und in dieser Stellung leicht zusammengedrückt werden können. Beim Abkühlen auf die Umgebungstemperatur werden die Bump-Strukturen in dieser zentrierten Form, mit dem fest eingestellten Abstand der Substratscheiben fest. Der Bereich, in dem metallische Bump-Strukturen plastisch verformbar sind, liegt unterhalb der Schmelztemperatur oder der eutektischen Temperatur der entsprechenden Materialien.

Gemäß einem Ausführungsbeispiel der Erfindung wird der Druck in den Bereichen oberhalb der Bump-Strukturen auf die Substratscheibe ausgeübt. Dann erfolgt das Einstellen des Abstandes kontinuierlich und zuverlässig. Die Kapazität kann abhängig von dem ausgeübten Druck kontinuierlich gemessen werden, und das Ausüben des Druckes bei Erreichen des Kapazitätswertes C₀ gestoppt werden.

Gemäß einem anderen Ausführungsbeispiel der Erfindung wird der Druck in einem mittleren Bereich der Substratscheibe auf diese ausgeübt. Dies kann für die praktische Handhabung sehr einfach sein. Es ist dabei zu berücksichtigen, daß sich die Substratscheiben durch Ausüben des Druckes verbiegen können, so daß sich der gemessene Kapazitätswert nach dem Stoppen des Druckausübens ändert. Die Genauigkeit, mit der die Kapazität eingestellt werden kann, kann dadurch verbessert werden, daß der Druck auf die Substratscheibe stufenweise für bestimmte Zeitabschnitte ausgeübt wird, und die Messung der Kapazität zwischen diesen Zeitabschnitten, wenn kein Druck auf die Substratscheibe ausgeübt wird, erfolgt.

Das Einstellen des Druckes während des Verbindungsprozesses hat überdies den Vorteil, daß die Funktion der Kapazität in Abhängigkeit des Druckes für die Kondensatoranordnung bestimmt wird. In diese Funktion gehen die Membraneigenschaften der Anordnung ein, welche durch deren Dicke, bzw. deren Dickenvariation beeinflußt werden. Somit ist bei der Verwendung der Anordnung als Drucksensor oder als Kapazitäts/Druckwandler eine sehr zuverlässige Messung möglich.

Gemäß einem Ausführungsbeispiel der Erfindung können die Substratscheiben aus Glas gebildet sein. Gemäß einem anderen Ausführungsbeispiel können die Substratscheiben aus einem Halbleitermaterial, insbesondere aus Silizium, gebildet sein. Im letzteren Fall ist es vorteilhaft, eine Isolatorschicht zwischen der Substratscheibe und der Kondensatorelektrode anzubringen, so daß die Kondensatorelektrode von der Substratscheibe elektrisch isoliert ist. In beiden Fällen läßt sich die Kondensatoranordnung leicht und in großen Stückzahlen herstellen.

Gemäß einem weiteren Ausführungsbeispiel der Erfindung kann eine Substratscheibe als Membran ausgebildet werden, so daß die Kondensatoranordnung einen Drucksensor bildet.

Im folgenden wird ein Ausführungsbeispiel der Erfindung anhand der Zeichnung näher beschrieben.

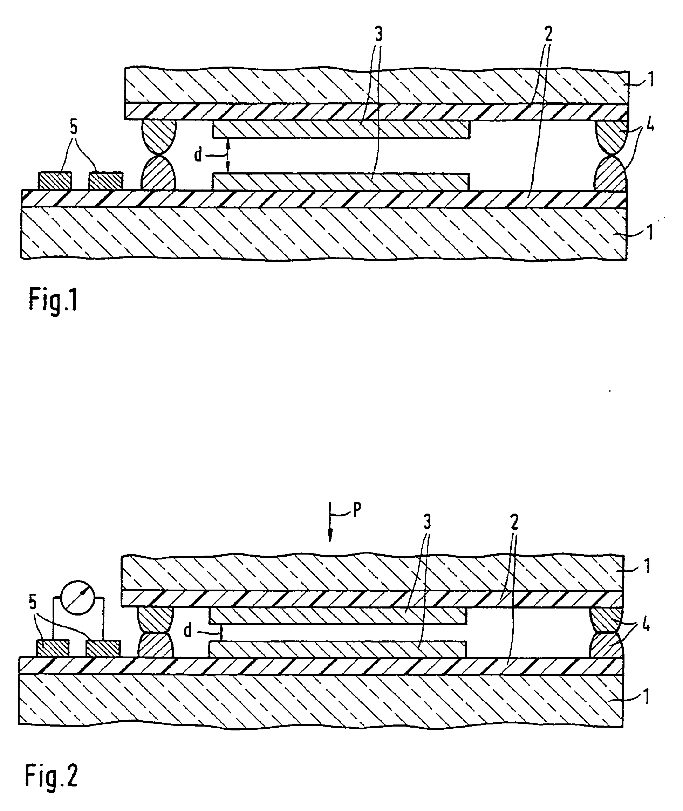

Fig. 1 und Fig. 2 zeigen ein Ausführungsbeispiel einer erfindungsgemäßen Kondensatoranordnung während des Verbindungsprozesses.

In Fig. 1 sind zwei einander gegenüberliegende Substratscheiben 1 dargestellt. Jede der Substratscheiben 1 ist mit einer Isolatorschicht 2 versehen, die jeweils eine Kondensatorelektrode 3 von der Substratscheibe 1 elektrisch isoliert. Beidseitig der Kondensatorelektrode 3 sind auf jede der Substratscheiben 1 Bump-Elemente 4 aufgebracht. Die beiden Substratscheiben 1 liegen einander so gegenüber, daß die Bump-Elemente 4 jeweils aufeinandertreffen, so daß sie miteinander zu einer Bump-Struktur verbunden werden können, wobei die Kondensatorelektroden 3 einen Kondensator geometrisch definieren. Die untere Substratscheibe 1 weist Meßanschlüsse 5 auf, mit denen die Kapazität des aus den Kondensatorelektroden 3 definiert Kondensators gemessen werden kann.

In Fig. 2 ist die Anordnung der Fig. 1 zu einem späteren Zeitpunkt während des Verbindungsprozesses gezeigt. Auf die obere Substratscheibe 1 wird ein Druck p ausgeübt, durch welchen die Bump-Strukturen zusammengedrückt werden. Dadurch wird gleichzeitig der Abstand d zwischen den Kondensatorelektroden verringert. An den Meßanschlüssen 5 wird gleichzeitig eine Kapazitätsmessung zur Bestimmung der Kapazität des aus den Kondensatorelektroden 3 gebildeten Kondensators durchgeführt. Hierdurch wird die Kapazität der Kondensatoranordnung bestimmt. Wenn ein vorgegebener Kapazitätswert C₀ erreicht ist, wird der Abstand d zwischen den Kondensatorelektroden 3 nicht mehr verringert; d.h. es wird kein weiterer Druck p auf die obere Substratscheibe 1 ausgeübt.

In der erfindungsgemäßen Anordnung können die Substratscheiben 1 aus Glas oder aus einem Halbleitermaterial gebildet sein. Wenn als Halbleitermaterial Silizium verwendet wird, kann eine Isolatorschicht aus Siliziumoxid oder Siliziumnitrid verwendet werden. Die Kondensatorelektroden sind typischerweise aus Metall, insbesondere Gold, Aluminium, die Bump-Strukturen aus Molybdän, Nickel, Gold, Blei, Zinn und deren Kombination gebildet. Die Bump-Strukturen können dabei aus verschiedenen Materialschichten zusammengesetzt sein, wobei die Schmelztemperaturen verschieden sein können. Dann kann das Zusammendrücken der Bump-Strukturen beispielsweise gezielt nur in der oberen Schicht erfolgen. Die Kondensatorvorrichtung kann als Drucksensor verwendet werden. Dabei werden die Eigenschaften des Drucksensors insbesondere durch die Dicke der Substratscheibe 1 bestimmt, welche als Membran wirkt.

Im folgenden wird das erfindungsgemäße Verfahren beschrieben. Die Substratscheiben 1 werden, wie in Fig. 1 gezeigt, einander gegenüberliegend angeordnet, so daß die Bump-Elemente 4 aufeinandertreffen und die Kondensatorelektroden 3 einander zur Bildung eines Kondensators gegenüberliegen. Die Kondensatoranordnung wird im Bereich der Bump-Elemente 4 auf eine für den Verbindungsprozeß erforderliche Temperatur T₁ gebracht. Wenn die Bump-Elemente 4 aus Metall bestehen, können sie miteinander verlötet werden. Für die Löttemperatur wird die Temperatur T₁ so gewählt, daß sie oberhalb des Schmelzpunktes des Metalls liegt, so daß die Bump-Elemente 4 miteinander verschmelzen. Danach wird die Temperatur auf einen Wert T₀ unterhalb des Schmelzpunktes abgekühlt, bei dem die Bump-Strukturen plastisch verformbar sind. Dann wird, wie in Fig. 2 gezeigt, ein Druck p auf die obere Substratscheibe 1 ausgeübt. Dadurch werden die Bump-Strukturen zusammengedrückt und der Abstand d der Kondensatorelektrode zueinander verringert. Wenn, wie im Beispiel in Fig. 2, der Druck p auf den mittleren Bereich der oberen Substratscheibe 1 ausgeübt wird, ist zu berücksichtigen, daß sich die obere Substratscheibe 1 aufgrund der Druckeinwirkung verformen kann. Dadurch ändert sich die Kapazität des durch die Kondensatorelektroden 3 gebildeten Kondensators, nachdem das Ausüben des Druckes p gestoppt wird. In diesem Fall wird der Druck p auf die obere Substratscheibe 1 stufenweise, für bestimmte Zeitabschnitte ausgeübt. Die Messung der Kapazität erfolgt kontinuierlich während des gesamten Verbindungsprozesses, einschließlich der plastischen Verformung. Dabei kann auch der Druck zwischenzeitlich weggenommen werden, um den Kapazitätswert C₀ zu ermitteln.

## Patentansprüche

1. Kondensatoranordnung mit zwei Substratscheiben (1), auf deren Oberfläche je eine Kondensatorelektrode (3) aufgebracht ist, wobei die Substratscheiben (1) durch sich beidseitig der Kondensatorelektroden (3) befindende Bump-Strukturen miteinander derart verbunden sind, daß die Kondensatorelektroden (3) einander gegenüberliegen und einen Kondensator bilden, wobei auf einer Substratscheibe (1) Meßanschlüsse (5) zur Kapazitätsmessung angeordnet sind, **dadurch gekennzeichnet dass** der Abstand d der Kondensatorelektroden (3) nur durch die Höhe der Bump-Strukturen festgelegt ist.

2. Kondensatorstruktur nach Anspruch 1, **dadurch gekennzeichnet, daß** eine Bump-Struktur aus zwei miteinander verlöteten Bump-Elementen (4) besteht, die auf den einander gegenüberliegenden Substratscheiben angeordnet sind.

3. Kondensatoranordnung nach Anspruch 1 oder 2, **dadurch gekennzeichnet, daß** die Substratscheiben (1) aus Glas gebildet sind.

4. Kondensatoranordnung nach einem Ansprüche 1 oder 2, **dadurch gekennzeichnet, daß** die Substratscheiben (1) aus einem Halbleitermaterial, insbesondere aus Silizium, gebildet sind.

5. Kondensatoranordnung nach einem der vorangehenden Ansprüche, **dadurch gekennzeichnet, daß** eine Substratscheibe (1) als Membran ausgebildet ist, so daß die Kondensatoranordnung einen Drucksensor bildet.

6. Verfahren zum Herstellen einer Kondensatoranordnung, bei dem zwei Substratscheiben (1), auf deren Oberfläche je eine Kondensatorelektrode (3) und beidseitig der Kondensatorelektrode (3) auf wenigstens einer der Substratscheiben Bump-Strukturen aufgebracht sind, mittels der Bump-Strukturen derart miteinander verbunden werden, daß die Kondensatorelektroden (3) einander gegenüberliegen und einen Kondensator bilden, **dadurch gekennzeichnet, dass** während des Verbindungsprozesses zur Einstellung des Abstandes d der Kondensatorelektroden (3) ein Druck p auf eine der Substratscheiben (1) ausgeübt und die Kapazität des Kondensators gemessen wird, und bei Erreichen eines bestimmten Kapazitätswertes C₀ der Verbindungsprozeß beendet wird.

7. Verfahren nach Anspruch 6, **dadurch gekennzeichnet, daß** die Bump-Strukturen aus Metall gebildet sind, und bei dem Verbindungsprozeß die Temperatur im Bereich der Bump-Strukturen auf einen zur Verbindung der Bump-Elemente (4) mit dem jeweils gegenüberliegenden Bump-Element (4) oder mit der gegenüberliegenden Substratscheibe (1) geeigneten Wert T₁ gebracht wird, die Temperatur, bei der der Druck p ausgeübt wird, auf einen Wert T₀ < T₁ erniedrigt wird, und bei Erreichen des Kapazitätswertes C₀ die Temperatur wieder auf die Umgebungstemperatur erniedrigt wird.

8. Verfahren nach Anspruch 6 oder 7, **dadurch gekennzeichnet, daß** die Temperatur T₀ so gewählt wird, daß sie niedriger als die Schmelztemperatur der Bump-Struktur ist, und daß die Bump-Struktur dabei noch plastisch verformbar ist.

9. Verfahren nach einem der Ansprüche 6 bis 8, **dadurch gekennzeichnet, daß** der Druck p in den Bereichen oberhalb der Bump-Strukturen auf die Substratscheibe (1) ausgeübt wird.

10. Verfahren nach einem der Ansprüche 6 bis 9, **dadurch gekennzeichnet, daß** die Kapazität abhängig von dem ausgeübten Druck p kontinuierlich gemessen wird, und das Ausüben des Druckes p bei Erreichen des Kapazitätswertes C₀ gestoppt wird.

11. Verfahren nach einem der Ansprüche 6 bis 10, **dadurch gekennzeichnet, daß** der Druck p in einem mittleren Bereich der Substratscheibe (1) auf diese ausgeübt wird.

12. Verfahren nach Anspruch 11, **dadurch gekennzeichnet, daß** der Druck p auf die Substratscheibe (1) stufenweise, für bestimmte Zeitabschnitte ausgeübt wird, und die Messung der Kapazität zwischen diesen Zeitabschnitten, wenn kein Druck p auf die Substratscheibe (1) ausgeübt wird, erfolgt.

## Claims

1. A capacitor assembly comprising two substrate discs (1), onto the surface of each of which a capacitor electrode (3) is applied, the substrate discs (1) being joined to each other by bump structures situated on either side of the capacitor electrodes (3) in such a manner that the capacitor electrodes (3) face each other and form a capacitor, with measuring connections (5) being provided on a substrate disc (1) to measure capacitance,
**characterised in that** the distance d between the capacitor electrodes (3) is fixed only by the height of the bump structures.

2. A capacitor structure according to Claim 1,
**characterised in that** a bump structure is produced from two bumps (4) that are soldered together and are disposed on the mutually facing substrate discs.

3. A capacitor assembly according to Claim 1 or 2,
**characterised in that** the substrate discs (1) are made from glass.

4. A capacitor assembly according to one of Claims 1 or 2,
**characterised in that** the substrate discs (1) are made from a semiconductor material, in particular from silicon.

5. A capacitor assembly according to one of the preceding Claims,
**characterised in that** a substrate disc (1) is constructed as a membrane so that the capacitor assembly forms a pressure sensor.

6. A process for the manufacture of a capacitor assembly, with which two substrate discs (1), onto the surface of each of which a capacitor electrode (3) is applied and on either side of the capacitor electrode (3) bump structures are applied to at least one of the substrate discs, are joined to each other by means of the bump structures in such a manner that the capacitor electrodes (3) face each other and form a capacitor,
**characterised in that** during the joining process to adjust the distance d between the capacitor electrodes (3) a pressure p is exerted on one of the substrate discs (1) and the capacitance of the capacitor is measured, and the joining process is ended when a specific capacitance value C₀ is reached.

7. A process according to Claim 6,
**characterised in that** the bump structures are made from metal, and during the joining process the temperature in the region of the bump structures is brought to a value T₁ that is suitable for joining the bumps (4) with the respective facing bump (4) or with the facing substrate disc (1), the temperature at which the pressure is exerted is reduced to a value T₀ < T₁, and when the capacitance value C₀ is reached the temperature is again reduced to the ambient temperature.

8. A process according to Claim 6 or 7,
**characterised in that** the temperature T₀ is chosen so that it is lower than the melting temperature of the bump structure,
and **in that** at the same time the bump structure is still plastically deformable.

9. A process according to one of Claims 6 to 8,
**characterised in that** the pressure p is exerted on the substrate disc (1) in the areas above the bump structures.

10. A process according to one of Claims 6 to 9,
**characterised in that** the capacitance is measured continuously as a function of the exerted pressure p and the exertion of the pressure p is stopped when the capacitance value C₀ is reached.

11. A process according to one of Claims 6 to 10,
**characterised in that** the pressure p is exerted on the substrate disc (1) in a central area thereof.

12. A process according to Claim 11,
**characterised in that** the pressure p is exerted on the substrate disc (1) in steps, for specific time intervals, and the measurement of the capacitance is carried out between these time intervals when no pressure p is being exerted on the substrate disc (1).

## Revendications

1. Dispositif de condensateur comprenant deux plaquettes de substrat (1) dont chacune comporte une électrode de condensateur (3) appliquée sur la surface, les plaquettes de substrat (1) étant reliées par des structures de bosses se trouvant des deux côtés des électrodes de condensateur (3) de sorte que les électrodes de condensateur (3) soient situées l'une en face de l'autre pour former un condensateur, et avec des raccords de mesure (5) pour mesurer la capacité disposés sur une plaquette de substrat (1),
**caractérisé en ce que**
la distance d entre les électrodes de condensateur (3) n'est déterminée que par la hauteur des structures de bosses.

2. Dispositif de condensateur selon la revendication 1,
**caractérisé en ce qu'**
une structure de bosse se compose de deux éléments de bosse (4) soudés ensemble et disposés sur les plaquettes de substrat opposées.

3. Dispositif de condensateur selon la revendication 1 ou 2,
**caractérisé en ce que**
les plaquettes de substrat (1) sont en verre.

4. Dispositif de condensateur selon l'une des revendications 1 ou 2,
**caractérisé en ce que**
les plaquettes de substrat (1) sont composées d'un matériau semiconducteur, en particulier en silicium.

5. Dispositif de condensateur selon l'une des revendications précédentes,
**caractérisé en ce qu'**
une plaquette de substrat (1) est réalisée sous la forme d'une membrane de sorte que le dispositif de condensateur forme un capteur de pression.

6. Procédé de fabrication d'un dispositif de condensateur, dans lequel deux plaquettes de substrat (1) comportent chacune une électrode de condensateur (3) appliquée sur la surface avec des structures de bosses appliquées sur au moins une des plaquettes de substrat des deux côtés de l'électrode de condensateur (3), et sont reliées par ces structures de bosses de sorte que les électrodes de condensateur (3) soient situées l'une en face de l'autre pour former un condensateur,
**caractérisé en ce que**
pendant le processus d'assemblage, on applique une pression p sur une des plaquettes de substrat (1) pour régler la distance d entre les électrodes de condensateur (3) et on mesure la capacité du condensateur, le processus d'assemblage étant terminé lorsqu'une valeur de capacité définie C₀ est atteinte.

7. Procédé selon la revendication 6,
**caractérisé en ce que**
les structures de bosses sont en métal et, pendant le processus d'assemblage, la température au niveau des structures de bosses est amenée à une valeur T₁ appropriée pour assembler les éléments de bosses (4) à l'élément de bosse (4) respectivement opposé ou à la plaquette de substrat (1) située à l'opposé, la température à laquelle est appliquée la pression p étant abaissée à une valeur T₀ < T₁ et cette température est de nouveau abaissée à température ambiante lorsque la valeur de la capacité C₀ est atteinte.

8. Procédé selon la revendication 6 ou 7,
**caractérisé en ce que**
la température T₀ est choisie plus basse que la température de fusion de la structure de bosse, pour que cette structure de bosse puisse ainsi être encore déformée plastiquement.

9. Procédé selon l'une des revendications 6 à 8,
**caractérisé en ce que**
la pression p est appliquée dans les régions situées au-dessus des structures de bosses sur la plaquette de substrat (1).

10. Procédé selon l'une des revendications 6 à 9,
**caractérisé en ce qu'**
on mesure la capacité en continu en fonction de la pression p appliquée, et on arrête l'application de la pression p lorsque la valeur de la capacité C₀ est atteinte.

11. Procédé selon l'une des revendications 6 à 10,
**caractérisé en ce que**
la pression p est appliquée sur la plaquette de substrat (1) dans une région centrale de celle-ci.

12. Procédé selon la revendication 11,
**caractérisé en ce que**
la pression p est appliquée par étapes sur la plaquette de substrat (1) à des intervalles de temps définis et on mesure la capacité entre ces intervalles de temps lorsque aucune pression p n'est appliquée sur la plaquette de substrat (1).
